# EUROPEAN PATENT SPECIFICATION

(11) **EP 0 761 337 B1**
(45) Date of publication and mention of the grant of the patent: **26.07.2000**
(21) Application number: 96306437.3
(22) Date of filing: 05.09.1996
(51) Int. Cl.: B21D 53/04, F28F 9/02

(54) **Pipe with closure portion, heat exchanger header and method of producing therefor**
Rohr mit Zwischenwand, Endkammer eines Wärmetauschers und sein Herstelllungsverfahren
Tube avec une cloison transversale, boîte à fluide tubulaire pour échangeur de chaleur et son procédé de fabrication

(30) Priority: 07.09.1995 JP 22992795
(43) Date of publication of application: 12.03.1997
(73) Proprietor: CALSONIC CORPORATION, Tokyo (JP); Caltec Corporation, Aiko-gun, Kanagawa (JP)
(72) Inventor: Inaba, Hiroyuki, Tokyo (JP); Saito, Michito, Tokyo (JP); Yasuda, Ryuji, c/o Caltec Corp., Aiko-gun, Kanagawa (JP)
(74) Representative: Gordon, Michael Vincent

(56) References cited:
- CH-A- 158 747
- JP-A- 63 279 094
- US-A- 3 554 150
- US-A- 5 090 477
- PATENT ABSTRACTS OF JAPAN vol. 013, no. 083 (M-802), 27 February 1989 & JP-A-63 279094 (SHOWA ALUM CORP), 16 November 1988,

## Description

### 1. Field of the Invention

This invention relates to a pipe having a partition formed within it, and also a method of producing therof.

### 2. Description of the Prior Art

In a heat exchanger for a condenser or the like, a partition has heretofore been formed within a header so as to change the flow passage of a fluid, as disclosed in Japanese Utility Model Unexamined Publication No. Hei. 4-63982.

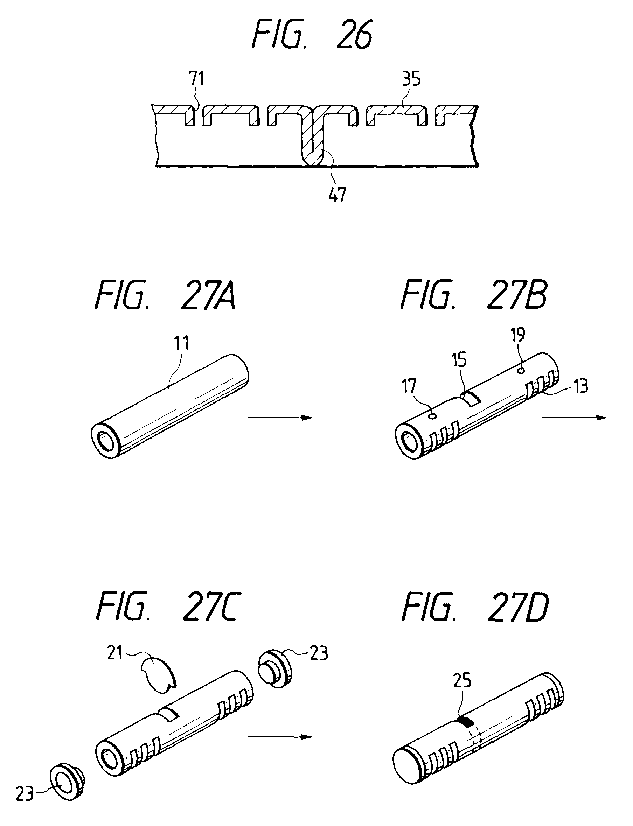

In a conventional method of producing such a header (hereinafter referred to as "partitioned header") with a partition for a heat exchanger, a material, comprising an aluminum alloy material having a brazing material clad or formed on its outer surface, is cut into a predetermined length to provide a pipe 11 for the header as shown in Fig. 27A. Thereafter, tube insertion holes 13, a divide-mounting slit 15, a fluid inlet port 17 and a fluid outlet port 19 are formed in the pipe 11 as shown in Fig. 27B. A divide 21, comprising an aluminum alloy material having a brazing material clad on its opposite sides or faces, is then inserted into the divide-mounting slit 15, and is provisionally secured thereto by argon arc welding, thereby partitioning the interior of the pipe 11 into two halves. A patch 23 of an aluminum alloy is press-fitted into each of the opposite ends of the pipe 11.

In order to produce a heat exchanger of the type within which a cooling medium makes a U-turn, one end of tubes of a core (which comprises alternately-stacked tubes (each comprising an aluminum alloy material having a brazing material clad on its outer surface) and fins (each made of an aluminum alloy having no brazing material clad thereon)) are fitted in the tube insertion hole 13 in the pipe whereas the other ends of the tubes are fitted respectively in tube insertion holes in a header with no partition, and these parts are fixed relative to each other by a jig or the like. Then, this assembly is heated in a furnace with a non-corrosive flux coated onto the relevant portions to be brazed, or heated in a vacuum furnace without coating a flux, so that the tubes and the fins are brazed to each other, and also the divide 21, the patches 23 and the tubes are brazed to the pipe 21. Reference numeral 25 in Fig. 27D designates the brazing of the divide 21, so that the interior of the pipe 11 is kept in a liquid-tight manner.

Such a conventional partitioned header for a heat exchanger is disadvantageous in that the cost of the material is high. Another problem is that the brazing of the divide 23 to the pipe 11 has sometimes been found defective. More specifically, the divide 21 is inserted into the slit 15 in the pipe 11, and is brazed to the slit 15 and to the inner surface of the pipe 11. To accomplish this brazing, the divide 21 comprises an aluminum alloy material having a brazing material clad on each side or face thereof. In theory, when the brazing material on the outer surface of the pipe 11 is drawn toward the area of brazing between the tube insertion hole 13 and the tube during the brazing, the brazing material on the divide is also drawn because the brazing material on the divide 23 is in contact with the brazing material on the pipe 11.

Further, since the patches 23 are press-fitted and brazed into each of the opposite ends of the pipe 11 to close the both ends of the pipe 11, the manufacturing steps are increased.

US-A-5090477 (Nearest technical state of the art) describes the formation of a partition integral with the pipe by squashing the pipe in two mutually perpendicular directions to collapse the walls of the pipe to block flow through it.

According to a first aspect of the present invention, a method of forming a pipe with an integral portion comprises the steps of:
i) forming first and second pipe half members each being substantially semi-circular in cross-section and each having two substantially parallel longitudinal edges,
ii) producing first and second half partition portions respectively in said first and second pipe half members, said first and second half partition portions extending laterally across said pipe half members and having a generally U-shaped cross-section with a base extending substantially between said longitudinal edges, and
iii) bonding said first and second pipe half members along corresponding longitudinal edges to form said pipe, said first and said second half partition portions having; been aligned opposite each other so that, upon said step of bonding being carried out, the respective bases of said first and second half partition portions are brought into contact thereby forming said integral partition.

According to a second aspect of the present invention, a pipe having an integral partition comprises:
first and second pipe half members, each being substantially semi-circular in cross-section and each having two substantially parallel longitudinal edges,
first and second half partition portions formed respectively in said first and second pipe half members extending laterally across said pipe half members and having a generally U-shaped cross-section with a base extending substantially between said longitudinal edges,
said first and second pipe half members bonded along corresponding longitudinal edges to form said pipe, said first and said second half partition portions having been aligned opposite each other so that the respective bases of said first and second half partition portions are brought into contact thereby forming said integral partition.

Particular embodiments in accordance with this invention will now be described with reference to the accompanying drawings; in which:-
Fig. 1 is a cross-sectional view of a portion of a pipe with a partition produced by a partitioned pipe-producing method of the invention;
Fig. 2 is a cross-sectional view taken along the line II-II of Fig. 1;
Figs. 3A to 3C are views showing a shaping process of the partitioned pipe-producing method;
Figs. 4A and 4B are views showing a removing process of the partitioned pipe-producing method;
Figs. 5A and 5B are views showing a compressing process of the partitioned pipe-producing method;
Figs. 6A and 6B are views showing the compressing process of Fig. 5 in detail;
Figs. 7A and 7B are views showing an edge-forming process of the partitioned pipe-producing method;
Figs. 8A and 8B are views showing an opposing process of the partitioned pipe-producing method;
Figs. 9A and 9B are views showing a mating process of the partitioned pipe-producing method;
Fig. 10 is a cross-sectional view of a portion of a sheet used in the pipe-producing method of the invention;
Figs. 11A and 11B are views showing a partitioned header for a heat exchanger produced by a first example of partitioned header-producing method of the invention;
Fig. 12 is a view showing a tube insertion hole-forming process of the first example of partitioned header-producing method;
Figs. 13A to 13G are views showing a sequence of processes in a second example of method of the invention for producing a partitioned header for a heat exchanger;
Fig. 14 is a cross-sectional view showing a partition portion in a modified method of the invention;
Figs. 15A to 15C are views showing a process of forming the partition portion of Fig. 14;
Figs. 16A to 16C are views explanatory of a modified method of bonding a pair of half-cylindrical portions;
Figs. 17A to 17C are views explanatory of another modified method of bonding a pair of half-cylindrical portions;
Figs. 18A and 18B are views showing a partitioned header for a heat exchanger produced by a third example of partitioned header-producing method of the invention;
Figs. 19A to 19C are views showing a shaping process for a first header member in the third example of partitioned header-producing method;
Figs. 20A and 20B are views showing a removing process for the first header member in the third example of partitioned header-producing method;
Figs. 21A and 21B are views showing a flange-forming process for the first header member in the third example of partitioned header-producing method;
Figs. 22A to 22C are views showing a shaping process for a second header member in the third example of partitioned header-producing method;
Figs. 23A and 23B are views showing a removing process for the second header member in the third example of partitioned header-producing method;
Figs. 24A and 24B are views showing an edge-forming process for the second header member in the third example of partitioned header-producing method;
Figs. 25A and 25B are views showing an edge-cutting process for the second header member in the third example of partitioned header-producing method;
Fig. 26 is a view showing a tube insertion hole-forming process for the second header member in the third example of partition header-producing method;
Figs. 27A to 27D are views showing a process for producing a conventional partitioned pipe;
Fig. 28 is a cross-sectional view of a portion of a pipe with a closure portion produced by an end-closed pipe-producing method;
Fig. 29 is a side view showing an end-closed header for a heat exchanger produced by the similar manner such as that of the partitioned header shown in Figs. 11A and 11B;
Fig. 30 is a side view showing an end-closed header for a heat exchanger produced by the similar manner such as that of the partitioned header shown in Figs. 18A and 18B;
Fig. 31 is another example of an end-closed header for a heat exchanger;
Fig. 32 is another example of an end-closed header for a heat exchanger; and
Fig. 33 is still another example of an end-closed header for a heat exchanger.

### DETAILED DESCRIPTION OF THE PREFERRED EMBODIMENTS

A method of the present invention will now be described in detail with reference to the drawings.

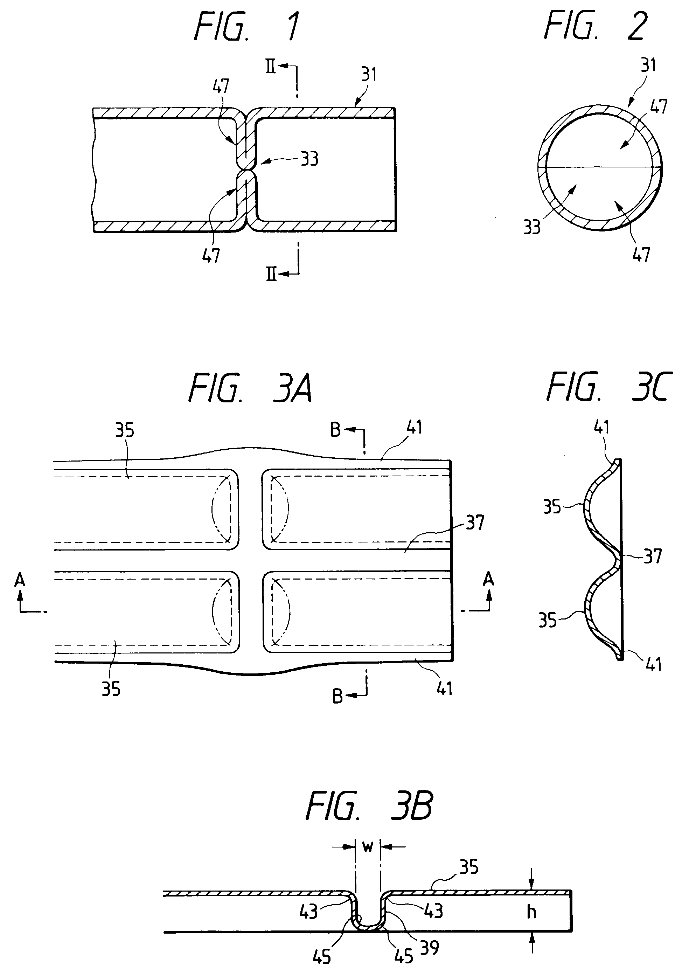

Figs. 1 and 2 show a pipe with a partition (hereinafter referred to as "partitioned pipe") produced by a method of the present invention. This partitioned pipe comprises a cylindrical pipe portion 31, and a partition portion 33 formed within this pipe portion 31 at a central portion thereof.

The partitioned pipe is produced in the following manner.

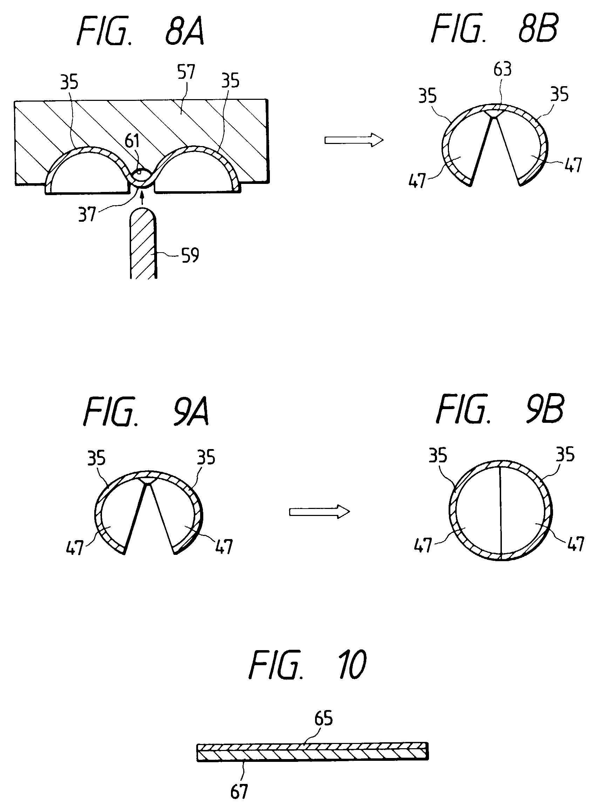

In this embodiment, as shown in Fig. 10, the material for forming the pipe is an aluminum alloy sheet 67 having a brazing material layer 65 clad or formed on one side or surface thereof which serves as an outer peripheral surface of the resulting pipe portion 31.

First, in a shaping process shown in Figs. 3A-3C, the sheet 67 is formed or shaped to have a pair of half-cylindrical (semi-cylindrical) portions 35. The half-cylindrical portions 35 are arranged side by side (that is, in juxtaposed relation to each other), and are interconnected by a connecting portion 37 disposed therebetween.

Each of the pair of half-cylindrical portions 35 has a partition-forming portion 39 of a U-shaped cross-section projected from an inner surface thereof. The radius of each half-cylindrical portion 35 is smaller by about 2 mm than the radius of the pipe portion 31 to be formed, and an edge portion 41 is formed at an outer side edge of the half-cylindrical portion 35.

The above shaping process is carried out by holding the flat sheet between dies and pressing. For example, for producing the partitioned pipe having a wall thickness of 1.5 mm and an outer diameter of 22 mm, the partition-forming portion 39 has a height h of 9 mm and a width w of 8 mm, and in this partition-forming portion 39, the radius of a pair of curved portions 43 is 2mm, and the radius of a curved portion 45 is 3.5 mm (See Fig. 3B).

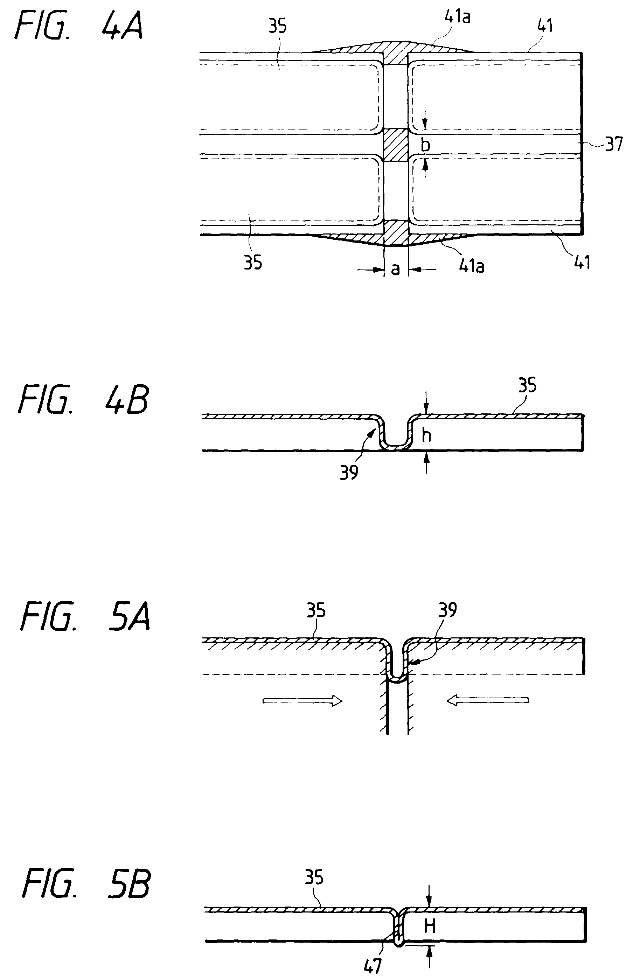

Thereafter, in a cutting or removing process shown in Fig. 4, that portion of the connecting portion 37 lying between the partition-forming portions 39 of the pair of half-cylindrical portions 35, and those portions of the edge portions 41 disposed immediately adjacent respectively to outer ends of the partition-forming portions 39, and excess portions 41a are removed. These portions to be removed are indicated by cross-hatching in Fig. 4A.

This removing (cutting) process is carried out by a trim piercing process, using a pressing machine. By way of example, when producing a partitioned pipe having an outer diameter of 22 mm, the dimension a of that portion of the connecting portion 37 to be cut in the axial direction is 8 mm, and the dimension b of that portion of the connecting portion 37 to be cut in a direction perpendicular to the axial direction is 9.5 mm. In this case, the inner diameter of the connecting portion 37 is equal to that of the pipe.

Thereafter, in a compression process shown in Fig. 5, the partition-forming portion 39 of each of the half-cylindrical portions 35 is compressed from opposite sides thereof to provide a half partition portion 47.

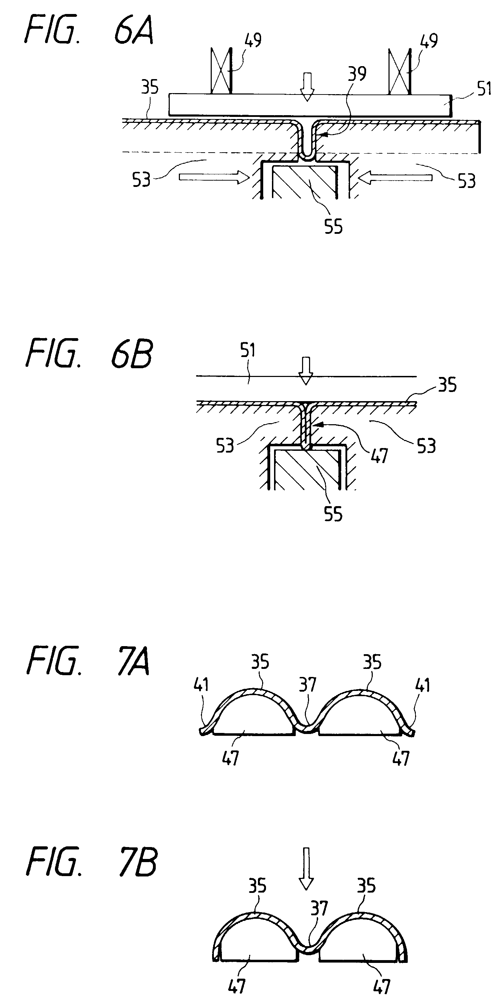

With reference to Fig. 6, this compression process is carried out by a method in which a workpiece holder 51 urged by springs 49 is pressed against the outer surfaces of the half-cylindrical portions 35 while a pair of compressing members 53 are received in the half-cylindrical portions 35, and are arranged respectively on the opposite sides of the partition-forming portions 39. Thereafter, the partition-forming portions 39 are compressed and shaped by the compressing members 53.

In this embodiment, a dimension correction block 55 is placed between the compressing members 53, and the length H (see Fig. 5B) that the half partition portion 47 projects from the inner surface of the half-cylindrical portion 35 is corrected by the dimension correction block 55. Also, the thickness of the half partition portion 47 is determined by the amount of compression by the compressing members 53.

As an example, in the case of producing the partitioned pipe having an outer diameter of 22 mm, the height H of the half partition portion 47 is corrected into 11 mm by the dimension correction block 55.

Then, in an edge-forming process shown in Figs. 7A and 7B, the edge portions 41 at the outer side edge of each half-cylindrical portion 35 is formed into an arcuate shape conforming to the half-cylindrical portion 35, as shown in Fig. 7B.

This edge-forming process is carried out by holding the pair of half-cylindrical portions 35 between predetermined dies, and then by shaping the edge portions 41 by pressing.

Then, in an opposing process shown in Figs. 8A and 8B, the connecting portion 37 is bent from the inside thereof to fold the pair of half-cylindrical portions 35 into opposed relation to each other.

This process is carried out by a method in which the outer surfaces of the half-cylindrical portions 35 are received in a die 57, and the connecting portion 37 is pressed into a recess 61 of an arcuate cross-section by a punch 59.

In this embodiment, when producing the partitioned pipe having an outer diameter of 22 mm, in the removing process shown in Figs. 4A and 4B, the dimension a corresponding to the distance by which the connecting portion 37 is cut in the axial direction is 8 mm, and the dimension b corresponding to the distance in which the connecting portion 37 is cut in the direction perpendicular to the axial direction is 9.5 mm. Therefore, a gap 63, formed adjacent to the connecting portion 37, can be made to a minimum when the pair of half-cylindrical portions 35 opposed each other. Namely, the dimensions a and b are so determined that the gap 63, formed adjacent to the connecting portion 37 is minimized.

Turning to Figs. 9A and 9B, in a mating step the pair of opposed half-cylindrical portions 35 are mated with each other. This mating process is carried out by placing the outer surfaces of the half-cylindrical portions 35 respectively in a pair of dies (not shown), and then by moving the dies toward each other, so that the pair of half-cylindrical portions 35 jointly form a pipe configuration.

Thereafter, a bonding process is carried out in which the pair of half-cylindrical portions 35, as well as the pair of half partition portions 47, are bonded together. This bonding process is carried out by brazing using a non-corrosive flux, but may be carried out by vacuum brazing.

For the purpose of coating the non-corrosive flux, the sheet material, having the brazing material layer 65 clad on its one surface serving as the outer surface of the resulting pipe, is used in this embodiment. The brazing material is characterized in that, when molten, it tends to seep into a narrow gap to thereby effect the brazing.

The brazing, employing such a brazing material, is carried out in such a state that the edge portions 41 to be bonded together are disposed underside of the the pair of half cylindrical portions 35. By doing so, the brazing can be achieved more satisfactorily due to gravity. By changing the materials, various other bonding methods can be used.

The process of removing the edge portions 41 may be performed after the edge-forming process. It is important that the bottom (Fig. 7B) of each edge portion 41 and the bottom of each half partition portion 47 lie in a common plane so that when the pair of half-cylindrical portions 35 are mated together to form a pipe configuration, a gap between the two edge portions 41, as well as a gap between the two half partition portions 47, can be made narrow (preferably not more than 0.1 mm); otherwise, the brazing of these portions would be adversely affected.

In the above method of producing the partitioned pipe, the partition-forming portions 39 of a U-shaped cross-section, formed respectively on the pair of half-cylindrical portions 35, are compressed from the opposite sides thereof to form the half partition portions 47, respectively. Then, when the pair of half-cylindrical portions 35 are mated with each other, the two half partition portions 47 jointly form the partition portion 33. Therefore, the partitioned pipe, having the partition portion 33 formed integrally therewith, can be easily produced from the single sheet material.

Therefore, there is no need to use an expensive pipe material preformed into a cylindrical shape, and the material cost can be reduced greatly as compared with the conventional method.

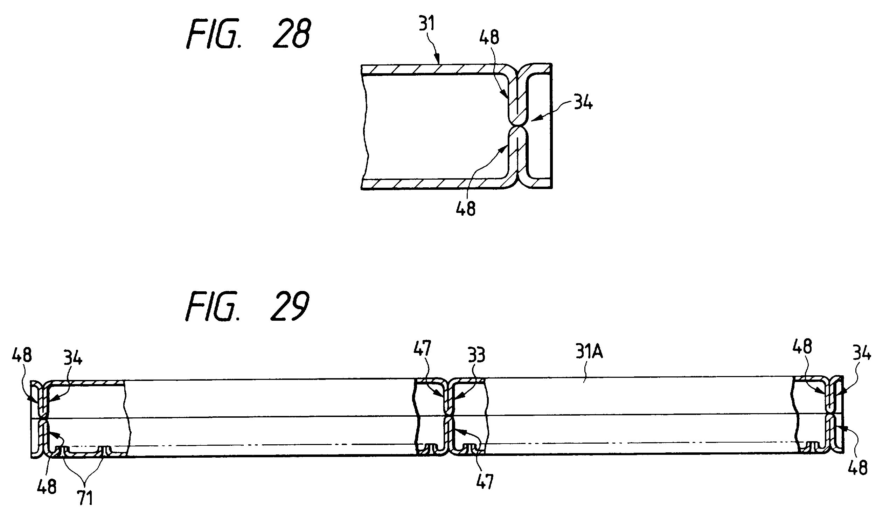

Fig. 28 shows an end-closed pipe produced using the above described method. This pipe comprises a closure portion 34 formed within the pipe portion 31 at an end portion thereof. The closure portion 34 comprises half closure portions.

In the producing steps of the end-closed pipe, a closure-forming portion (partition-forming portion) is formed on each of the pair of half cylindrical portions at the end thereof. As another method, before or after the above bonding process, the outside portion of the closure portion 34 of the pipe portion 31 may be cut away in accordance with the specification or request to remove the needless portion. The other steps, that is, to form the end closure portion 48 are same as that of the partioned pipe. Therefore, the end portion of the pipe portion 31 is closed by the closure portion 34 easily and surely without a patch or the like.

A first example of a method of producing a header (hereinafter referred to as "partitioned header") with a partition of the invention for a heat exchanger will now be described.

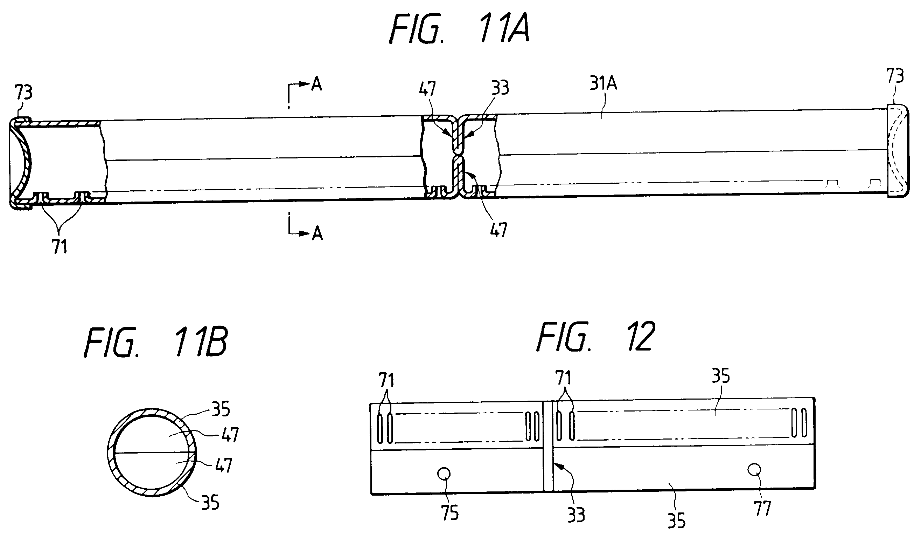

Figs. 11A and 11B show a partitioned header for a heat exchanger produced according to this embodiment, which comprises a cylindrical pipe portion 31A, and a partition portion 33 formed within the pipe portion 31A at a central portion thereof. Tube insertion holes 71 are formed through the pipe portion 31A at one side of an outer periphery thereof, and are spaced at predetermined intervals along the length of the pipe portion 31A. Opposite open ends of the pipe portion 31A are closed by lid members 73, respectively.

In this method of producing the partitioned header for a heat exchanger, a sheet 67 of aluminum having a brazing material layer 65 clad on one surface thereof serving as an outer peripheral surface of the resulting pipe portion 31A is used, and a pair of half-cylindrical portions 35, as well as a pair of half partition portions 47, are brazed together in a bonding process, as described above for the method of producing the partitioned pipe.

In this embodiment, after an edge-forming process (see Figs. 7A and B), the tube insertion holes 71, spaced at predetermined intervals, are formed in one of the half-cylindrical portions 35, as shown in Fig. 12. At the same time, a fluid inlet port 75 for introducing a heat transfer medium (cooling medium) into the header, as well as a fluid outlet port 77 for discharging this medium from the header, is formed in the half-cylindrical portion 35. This process is carried out by a slit-piercing process, using a pressing machine.

In the method of producing the partitioned header for the type of heat exchanger within which the cooling medium is cycled once, the bonding process is carried out in the following manner. The tube insertion holes 71, formed in the pipe portion 31A having the lid members 73 fitted respectively on the opposite ends thereof, are fitted on one end of each tube of a core portion (comprising fins and the tubes) of the heat exchanger whereas tube insertion holes in a header with no partition are fitted respectively on the other ends of the tubes, and in this condition these parts are fixed relative to each other by a jig or the like. Then, the bonding between the pair of half-cylindrical portions 35, between the pair of half partition portions 47, between the lid members 73 and the pipe portion 31A, between the tubes and the tube insertion holes 71, and between the tubes and the fins are effected by vacuum brazing or a brazing method in which a non-corrosive flux is coated onto those portions to be brazed, and the brazing is effected, for example, in an atmosphere of nitrogen.

When the brazing is to be applied to the heat exchanger in a prefixed condition, those portions of the pipe portion 31A to be bonded together are directed downwardly. By doing so, the brazing material, when molten, collects on these pipe bonding portions by gravity, and is drawn into a narrow gap between the pipe bonding portions and also into a gap between the pair of half partition portions, thereby enhancing the brazing ability.

In the above method of producing the partitioned header for a heat exchanger, partition-forming portions 39 of a U-shaped cross-section, formed respectively on the pair of half-cylindrical portions 35, are compressed from the opposite sides thereof to form the half partition portions 47, respectively. Thereafter, when the pair of half-cylindrical portions 35 are mated with each other, the two half partition portions 47 jointly form the partition portion 33, as described above for the method of producing the partitioned pipe. Therefore, the pipe portion 31A, having the partition portion 33 formed integrally therewith, can be easily produced from the single sheet material.

Based on the foregoing, there is no need to use an expensive pipe material preformed into a cylindrical shape, and the material cost can be reduced greatly as compared with the conventional method.

In contrast with the conventional method using a cylindrical pipe, the partition is formed integrally with the pipe portion, and therefore the number of component parts is reduced, and hence the cost can be reduced. Since the brazing of the partition portion is effected within the header, leakage of the cooling medium to the exterior due to defective brazing of the partition portion is prevented, thereby enhancing the brazing ability. Finally, since the tube insertion holes can be formed in a semi-circular shape, a tube insertion hole-forming die has sufficient strength, and the time required for forming the tube insertion holes can be shortened, which also reduces the cost.

Fig. 29 shows an embodiment of a header of which both end portions are closed (hereinafter referred to as "end-closed header") according to the above method. In this end-closed header, closure portions 34 are formed at the both ends by the same method as that of the partition portion 33.

A second example of a method of producing a partitioned header for a heat exchanger will now be described.

In this embodiment, there is used a sheet of an aluminum alloy having a brazing material layer 65 clad on one surface thereof serving as an outer peripheral surface of the resulting pipe portion 31 (See Fig. 10).

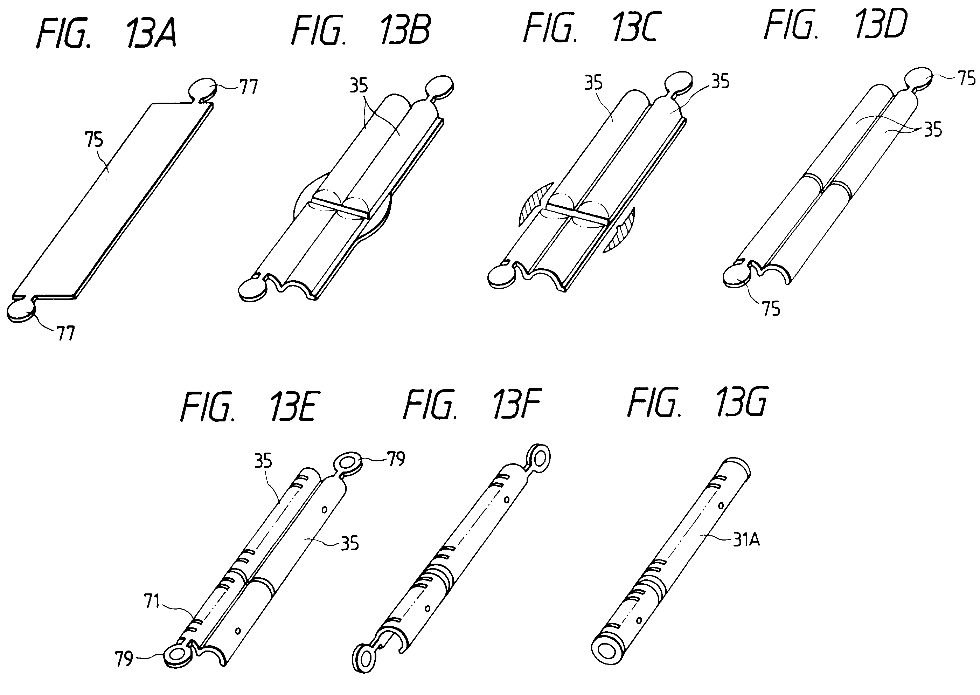

In this embodiment, in a removing process performed before a shaping process, a pair of lid members 77 of a circular shape are formed integrally on opposite ends of the sheet 75, respectively, as shown in Fig. 13A, and a projected portion 79 is formed on each of the lid members 77 by pressing when tube insertion holes 71 are formed in a half-cylindrical portion 35, as shown in Fig. 13E.

Then, in a process (Fig. 13F) before a bonding process, the opposite ends of a pipe portion 31A are respectively inserted into the projected portions 79 of the two lid members 77, and are brazed thereto in the bonding process. In this embodiment, the lid members 77 are also formed from the single sheet material.

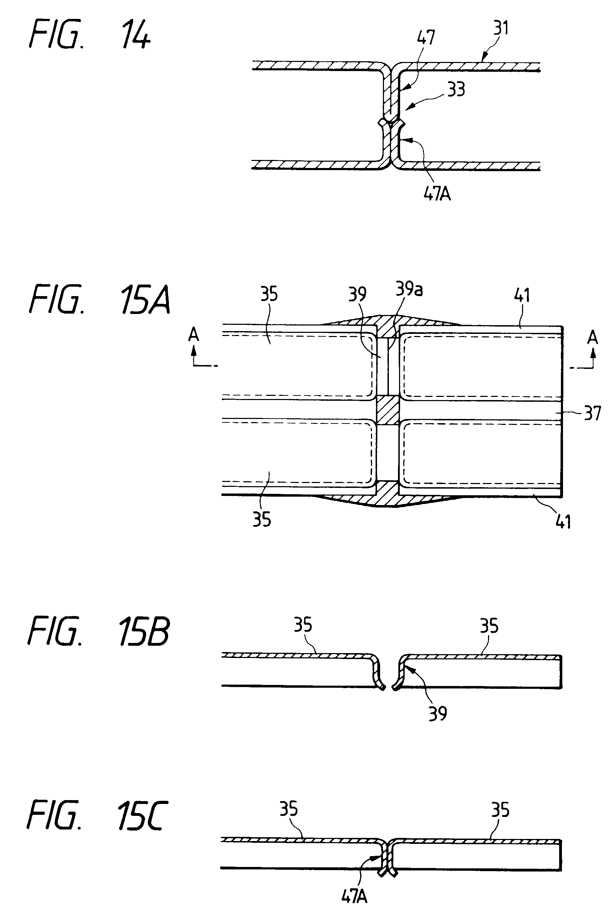

In the above embodiments, although the pair of half partition portions 47 have the same shape, and are brazed together at their distal ends, the present invention is not to be limited to such an arrangement. For example, there may be used an arrangement (see Fig. 14) in which one of the half partition portions 47 is cut at its distal end along a median plane thereof, and the thus cut end is opened in the direction of the length of the half-cylindrical portion 35, and the other half partition portion 47 is held against this opened end.

In this producing method (see Figs. 15A, 15B and 15C), one partition-forming portion 39 is cut at its distal end along a median plane thereof to have a slit 39a in a removing process shown in Fig. 15A, and this cut end of the one partition-forming portion 39 is formed into a V-shaped or a U-shaped cross-section by a jig in a compressing process shown in Fig. 15C.

In this producing method, the distal end of one half partition portion 47 serves as a reception portion for receiving the brazing material, and therefore the pair of half partition portions 47 and 47A can be brazed together more positively.

This method is applicable for producing the closure portion 34 at the end of the pipe portion 31.

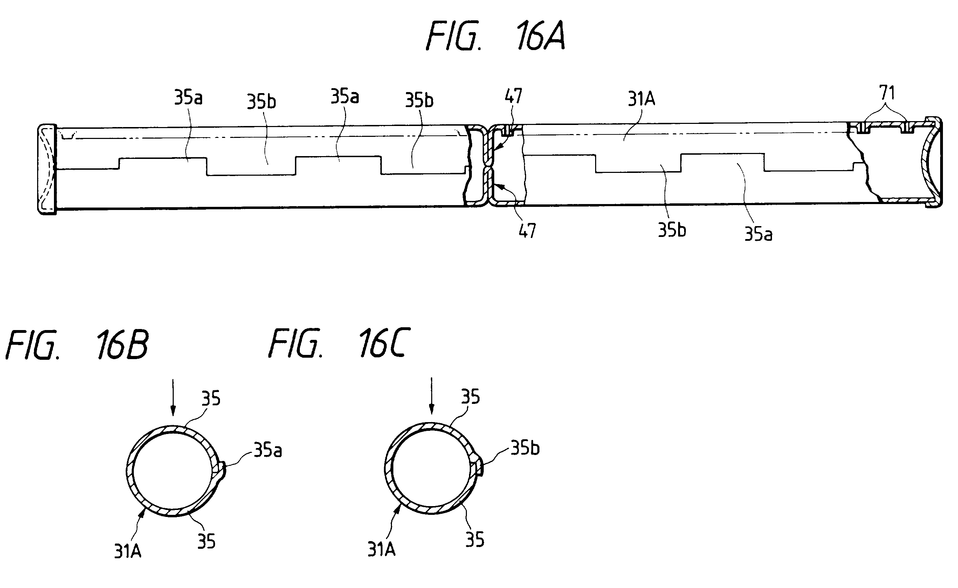

In the above embodiments, the pair of half-cylindrical portions 35 has the same shape, and their edges are bonded together by brazing; however, the present invention is not to be limited to such an arrangement. For example, there may be used an arrangement (see Figs. 16A, 16B and 16C) in which projections 35a are formed at predetermined intervals on an outer side edge of one half-cylindrical portion 35 whereas projections 35b are formed at predetermined intervals on an outer side edge of the other half-cylindrical portion 35 in such a manner that the projections 35a and 36b are alternately disposed, and are held firmly against the outer surfaces of their mating half-cylindrical portions 35, respectively, when the pair of half-cylindrical portions 35 are mated together. With this arrangement, the strength of the pipe portion 31A in the axial direction is increased.

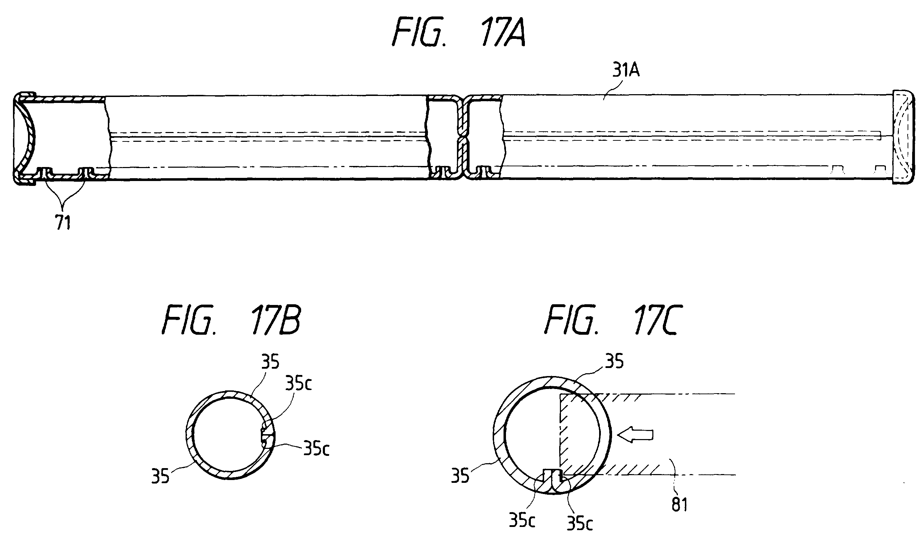

Additionally, there may be used an arrangement (see Figs. 17A, 17B and 17C) in which a bent portion 35c is formed on an outer side edge of each of the pair of half-cylindrical portions 35, and these bent portions 35c are abutted against each other when the pair of half-cylindrical portions 35 are mated together.

With this arrangement, even if the brazing material layer 65 is formed only the outer peripheral surface of the pipe portion 31A, that portion of the brazing material layer 65 formed on one bent portion 35c can be disposed in contiguous relation to that portion of the brazing material layer 65 formed on the other bent portion 35c, so that the brazing can be carried out more positively.

Furthermore, the positioning of a tube 81 can be effected accurately by abutting a distal end of the tube 81 against the bent portion 31c, as shown in Fig. 17C.

In the above methods of producing the partitioned header for a heat exchanger, although the tube insertion holes 71 are formed after the edge-forming process, the present invention is not to be limited to such embodiments, and the tube insertion holes 71 may be formed at any stage before the bonding process, and may be formed, for example, in the cutting process.

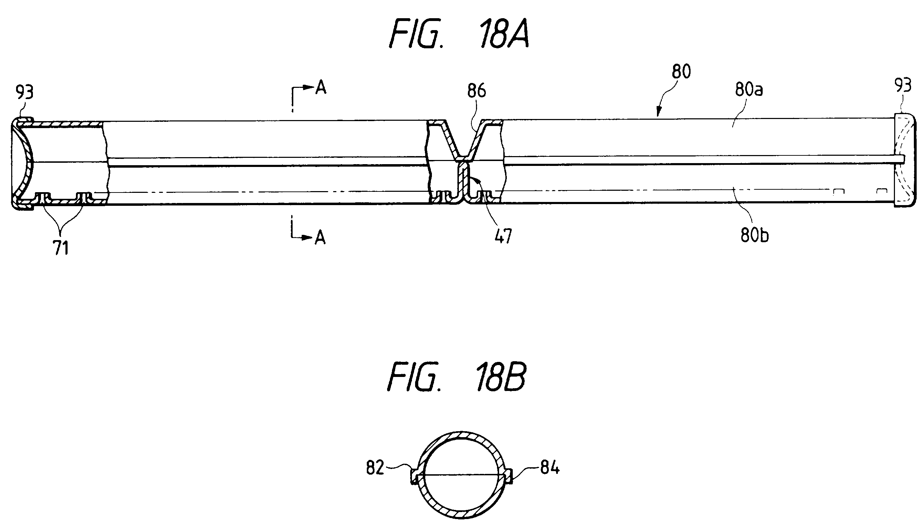

A partitioned header for a heat exchanger, produced by a third embodiment of a method of the present invention, comprises a first header member 80a and a second header member 80b, as shown in Figs. 18A and 18B. As shown, the first header member 80a has a semi-cylindrical (half-cylindrical) shape, and has a half partition portion 86 of a generally U-shaped cross-section formed at a generally central portion thereof in a recessed manner. Flanges 84 are formed respectively on opposite side edge portions 82 to be brazed to the second header member 80b.

The second header member 80b has a semi-cylindrical shape, and has a half partition portion 47 formed at that portion thereof corresponding to the half partition portion 86 of the first header member 80a. Tube insertion holes 71 are formed in an apex portion of the semi-cylindrical second header member 80b, and are spaced at predetermined intervals along the length thereof.

The first and second header members 80a and 80b are mated together at their open sides to form a cylindrical pipe, and opposite ends of this cylindrical pipe are closed by lid members 93, respectively.

A method of producing the first header member 80a will now be described.

A sheet 67 (see Fig. 10) of an aluminum alloy, having a brazing material layer 65 formed on one surface thereof serving as an outer peripheral surface of the resulting first header member 80a, is used for forming the first header member 80a.

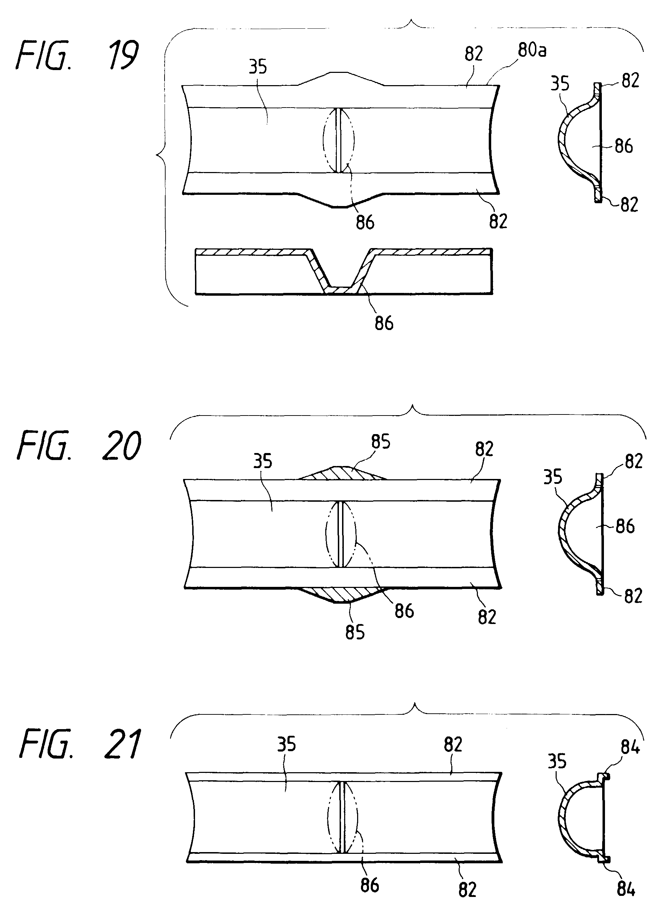

In a shaping process shown in Fig. 19, the sheet 67 is shaped to have a half-cylindrical portion 35. At the same time, the half partition portion 86 of a V-shape (or a U-shape) is formed on the half-cylindrical portion 35.

At this time, the bottom of the half partition portion 86 and the bottom surface of the edge portions 82 lie in a common plane. Namely, the radius of the half-cylindrical portion 35 is equal to the radius of the header 80, and in the case of a partitioned header having an outer diameter of 22 mm, the radius of the half-cylindrical portion 35 is 11 mm.

Then, excess portions 85 (see Fig. 20) are removed. In this embodiment, since no tube insertion hole is formed in the first header member 80a, the half partition portion 47 does not need to be compressed as in Figs. 5 and 6. Therefore, here, it is only necessary to remove the excess portions 85.

Then, each of the opposite side edge portions 82 is bent to form the flange 84, as shown in Fig. 21. The removal of the excess portions 85 and the formation of the flanges 84 may be effected at the same time.

In a method of forming the second header member 80b, a sheet 67 (see Fig. 10) of an aluminum alloy, having a brazing material layer 65 formed on one surface thereof serving as an outer peripheral surface of the resulting second header member 80b, is used as described above for the first header member 80a.

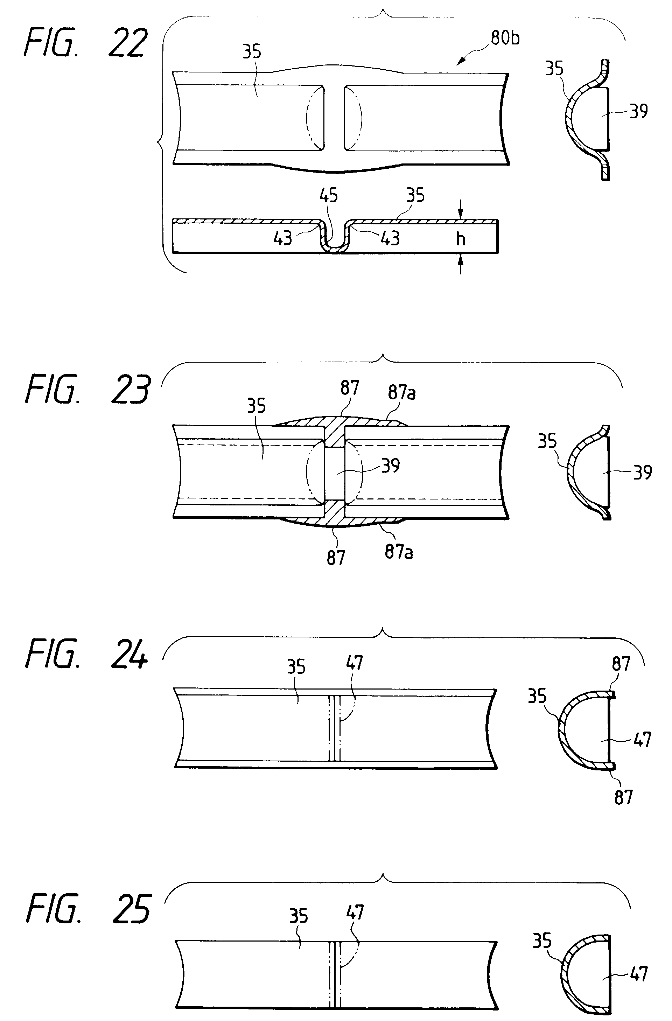

The method of forming the second header member 80b is basically the same as the method of forming one half-cylindrical portion in the first example of method of producing the partitioned header for a heat exchanger. First, a second half-cylindrical portion 35 is formed as shown in Fig. 22. This half-cylindrical portion 35 has a partition-forming portion 39 of a U-shaped cross-section projected from an inner surface thereof.

Then, in a cutting process, those portions of opposite side edge portions 87 disposed immediately adjacent respectively to opposite ends of the partition-forming portion 39, as well as excess portions 87a, are removed by cutting. These portions to be removed are indicated by hatching in Fig. 23.

Then, in a compressing process as in Figs. 5 and 6, the partition-forming portion 39 is compressed from the opposite sides to form the half partition portion 47. Thereafter, in an edge-forming process, the opposite side edge portions 87 of the second half-cylindrical portion 35 are formed into an arcuate shape conforming to the half-cylindrical portion 35, as shown in Fig. 24.

Then, the edge portions 87 are cut in such a manner that these edge portions 87 can lie in a plane in which the distal end of the half partition portion 47 lies, as shown in Fig. 25. Thereafter, the tube insertion holes 71 are formed in the second half-cylindrical portion 35, as shown in Fig. 26. The tube insertion holes 71 may be formed at any time after the formation of the half-cylindrical portion 35.

In this method of producing the partitioned header for the type of heat exchanger within which the cooling medium makes one U-turn, the bonding process is carried out in the following manner. The tube insertion holes 71, formed in the second header member 80b (which is mated with the first header member 80a to assemble the header 80, with the lid members 73 fitted respectively on the opposite ends of this header), are fitted on one ends of tubes of a core portion (comprising fins and tubes) of the heat exchanger whereas tube insertion holes in a header with no partition are fitted respectively on the other ends of the tubes, and in this condition these parts are fixed relative to each other by a jig or the like. Then, the bonding is carried out by a brazing method using a non-corrosive flux, or vacuum brazing. At this time, the brazing material on the outer surface of the header melts, and is drawn into a gap between bonding portions of the first and second header members 80a and 8b and also into a gap between the two half partition portions 86 and 47, thus effecting the brazing.

There is no need to use an expensive pipe material preformed into a cylindrical shape, and the material cost can be reduced greatly as compared with the conventional method.

In contrast with the conventional method using a cylindrical pipe, the partition is formed integrally with the header, and therefore the number of component parts is reduced, and hence the cost can be reduced. Since the brazing of the partition portion is effected within the header, leakage of the cooling medium to the exterior due to defective brazing of the partition portion is prevented, thereby enhancing the brazing ability.

Furthermore, since the tube insertion holes can be formed in a semi-circular shape, a tube insertion hole-forming die can have a sufficient strength, and the time required for forming the tube insertion holes can be shortened, which reduces the cost.

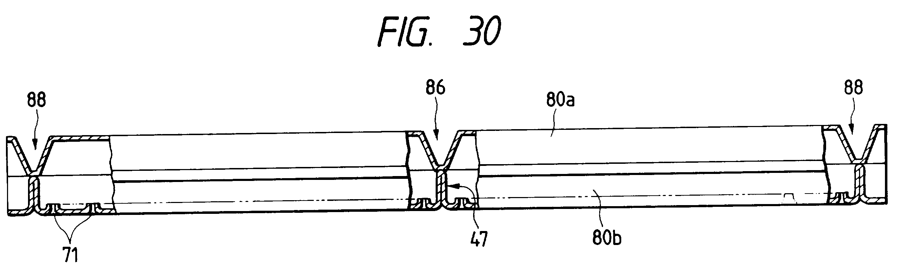

Fig. 30 shows an end-closed header similar to the partitioned header in Figs. 18A and 18B. In this header, half closure portions 88, as the closure portion are formed at the both ends by the same producing method as that of the half partition portions 86, 47.

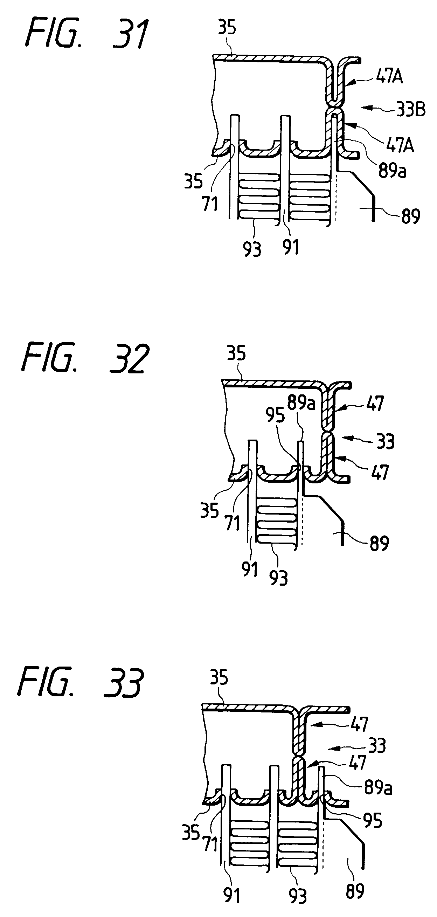

Fig. 31 shows another embodiment of a header for a heat exchanger. In this embodiment, a closure portion 33B, provided at ends of half-cylindrical portions 35, is formed by half closure portion 47A of a U-shaped cross-section bonded together.

An end portion 89a of a reinforcement 89 is fixedly fitted in the half closure portion 47A of that half-cylindrical portion 35 having tube insertion holes 71 formed therein.

Tubes 91 are fitted in the tube insertion holes 71, respectively, and corrugated fins 93 are provided between the tubes 91 and also between the tube 91 and the reinforcement 89.

In the heat exchanger header, since the end portion 89a of the reinforcement 89 is fitted in the half closure portion 47A, the end portion 89a of the reinforcement 89 can be fixedly secured to the header body easily and positively.

Fig. 32 shows another embodiment of a header for a heat exchanger. In this embodiment, a reinforce insertion hole 95 is formed through that half-cylindrical portion 35 having tube insertion holes 71 formed therein, and is disposed axially inwardly of a half closure portion 47 thereof.

The end portion 89a of the reinforcement 89 is fixedly fitted in this reinforcement insertion hole 95.

In this embodiment, also, the end portion 89a of the reinforcement 89 can be fixedly secured to the header body easily and positively.

Fig. 33 shows still another embodiment of a header for a heat exchanger. In this embodiment, a reinforce insertion hole 95 is formed through that half-cylindrical portion 35 having tube insertion holes 71 formed therein, and is disposed axially outwardly of a half closure portion 47 thereof.

The end portion 89a of the reinforcement 89 is fixedly fitted in this reinforcement insertion hole 95.

In this embodiment, also, the end portion 89a of the reinforcement 89 can be fixedly secured to the header body easily and positively.

A modified first header member is formed by the same method of forming the second header member 80b except for the step of forming the tube insertion holes. Those portions of the first and second headers joined together are not limited to the configuration shown in the above embodiment, and may have any other suitable configuration.

In the above embodiments, although the single partition portion is provided, the present invention is not to be limited to such an arrangement.

Further, although the headers in the above embodiments have a circular cross-section, the headers can have any other suitable cross-section.

In all of the above embodiments, although the aluminum alloy sheet, having the brazing material clad or formed on one surface thereof serving as the outer peripheral surface of the resulting pipe or header, is used, the cladding of the brazing material is not limited to this surface, and the brazing material may be clad on the other surface of the sheet serving as the inner peripheral surface of the resulting pipe or header, or may be clad on the opposite sides of the sheet.

Instead of using the cladding of the brazing material, the brazing material may be placed on those portions to be brazed so as to effect the brazing.

Additionally, although a single partition portion is provided in each of the above embodiments, the present invention is not to be limited to such an arrangement. A plurality of such partition portions may, of course, be provided in the manner described above.

As described above, in the partitioned-pipe producing method according to the first aspect of the invention, the partition-forming portion, formed on each of the pair of half-cylindrical portions, is compressed from the opposite side thereof to form the half partition portion, and when the pair of half-cylindrical portions are mated together, the pair of half partition portions are mated together to form the partition portion. Thus, the pipe, having the integrally-formed partition portion, can be easily formed from the single sheet. By using the brazing material-clad sheet, the pair of half-cylindrical portions, as well as the pair of half partition portions, are bonded together by brazing, and therefore these portions can be bonded positively.

In the partitioned header-producing method according to the second embodiment, the header, having the integrally-formed partition portion, can be easily formed from the single sheet. By using the brazing material-clad sheet, the pair of half-cylindrical portions, as well as the pair of half partition portions, are positively bonded together by brazing, thereby positively preventing a heat transfer medium from leaking from the heat exchanger.

## Claims

1. A method of forming a pipe (31) with an integral partition (33) comprising the steps of:
i) forming first and second pipe half members (35) each being substantially semi-circular in cross-section and each having two substantially parallel longitudinal edges (41),
ii) producing first and second half partition portions (47, 86) respectively in said first and second pipe half members (35), said first and second half partition portions (47, 86) extending laterally across said pipe half members (35) and having a generally U-shaped cross-section with a base extending substantially between said longitudinal edges (41), and
iii) bonding said first and second pipe half members (35) along corresponding longitudinal edges (41) to form said pipe (31), said first and said second half partition portions (47, 86) having been aligned opposite each other so that, upon said step of bonding being carried out, the respective bases of said first and second half partition portions (47, 86) are brought into contact thereby forming said integral partition (33).

2. A method of forming a pipe (31) with an integral partition (33) as claimed in claim 1, wherein said step of forming said first and second pipe half members (35) is carried out on a single flat sheet in which one of the longitudinal edges (41) of said first pipe half member (35) is connected to one of the longitudinal edges (41) of said second pipe half member (35) by a substantially rectangular shaped connecting portion (37).

3. A method of forming a pipe (31) with an integral partition (33) as claimed in claim 2, wherein said first and second half partition portions (47) are aligned adjacent one another across said connecting portion (37) and said step of producing first and second half partition portions (47) includes the step of removing at least that portion of said connecting portion (37) disposed between said first and second half partition portions (47).

4. A method of forming a pipe (31) with an integral partition (33) as claimed in claim 3, wherein first and second half partition forming portions (39) are provided which extend laterally across respective said pipe half members (35) and have a generally U-shaped cross-section with a pair of opposing side walls and said step of producing said first and second half partition portions (47) also includes the step of compressing said first and second half partition forming portions (39) from opposite side walls until the opposing side walls are substantially pressed together.

5. A method of forming a pipe (31) with an integral partition (33) as claimed in claim 2, wherein said flat sheet comprises an aluminum sheet (67) having a brazing material layer (65) formed thereon, and in said bonding step, said first and second pipe half members (35) as well as said half partition portions (47, 86), are brazed together with said brazing material layer (65) forming the outer surface of said pipe (31).

6. A method of forming a pipe (31) with an integral partition (33) as claimed in any one of the preceding claims, further comprising the step of forming tube insertion holes (71) in one of said first or second pipe half members (35).

7. A method of forming a pipe (31) with an integral partition (33) as claimed in any one of the preceding claims, further comprising the steps of cutting a slit (39a) in the base of one of said half partition portions (47a) thereby producing cut ends to said opposing side walls and flaring said cut ends outwardly to form a flared portion, the other of said half partition portions (47) being received in said flared portion.

8. A method of forming a pipe (31) with an integral partition (33) as claimed in any one of the preceding claims, further comprising the steps of forming a first set of projections (35a) in a longitudinal edge of one of said first or second pipe half members (35) and a second set of projections (35b) in the opposing longitudinal edge of the other of said first or second pipe half members (35) in an alternating manner, said first (35a) and second (35b) sets of projections respectively mating with the opposed pipe half members (35).

9. A method of forming a pipe (31) with an integral partition (33) as claimed in any one of the preceding claims, further comprising the step of bending the longitudinal edges (41) of said pipe half members (35) in an L-shape.

10. A method of forming a pipe (31) with an integral partition (33) as claimed in claim 4, wherein said first and second pipe half members (35) are of equal length and said first and second half partition portions (48) are formed at both ends of each of said first and second pipe half members (35) to close both ends of said pipe (31) during said bonding step.

11. A pipe (31) having an integral partition (33) comprising:
first and second pipe half members (35), each being substantially semi-circular in cross-section and each having two substantially parallel longitudinal edges (41),
first and second half partition portions (47, 86) formed respectively in said first and second pipe half members (35) extending laterally across said pipe half members (35) and having a generally U-shaped cross-section with a base extending substantially between said longitudinal edges (41),
said first and second pipe half members (35) bonded along corresponding longitudinal edges (41) to form said pipe (31), said first and said second half partition portions (47, 86) having been aligned opposite each other so that the respective bases of said first and second half partition portions (47, 86) are brought into contact thereby forming said integral partition (33).

12. A pipe (31) having an integral partition (33) as claimed in claim 11, wherein said first and second pipe half members (35) are formed from a single flat sheet wherein one of the longitudinal edges (41) of said first pipe half member (35) is connected to one of the longitudinal edges (41) of said second pipe half member (35) by a substantially rectangular shaped connecting portion (37).

13. A pipe (31) having an integral partition (33) as claimed in claim 12, wherein said first and second half partition portions (47) are aligned adjacent one another across said connecting portion (37) and at least that portion of said connecting portion (37) disposed between said first and second half partition portions (47) is removed from said sheet.

14. A pipe (31) having an integral partition (33) as claimed in claim 13, wherein first and second half partition forming portions (39) extending laterally across respective said pipe half members (35) and having a generally U-shaped cross-section with a pair of opposing side walls are provided and by compressing said first and second half partition forming portions (39) from opposite side walls until the opposite side walls are substantially pressed together, said first and second half partition portions (47) extending substantially perpendicularly from the inner surface of said first and second pipe half members (35) are formed.

15. A pipe (31) having an integral partition (33) as claimed in claim 12, wherein said flat sheet comprises an aluminum sheet (67) having a brazing material layer (65) formed thereon, said first and second pipe half members (35) as well as said half partition portions (47, 86) being brazed together with said brazing material layer (65) forming the outer surface of said pipe (31).

16. A pipe (31) having an integral partition (33) as claimed in any one of claims 11 to 15, further comprising tube insertion holes (13) in one of said first or second pipe half members (35).

17. A pipe (31) having an integral partition (33) as claimed in claims 11 to 16, further comprising a slit (39a) in the base of one of said half partition portions (47a) thereby producing cut ends to said opposing side walls, the cut ends being flared outwardly to form a flared portion adapted to receive the other of said half partition portions (47) .

18. A pipe (31) having an integral partition (33) as claimed in claims 11 to 17, further comprising a first set of projections (35a) in a longitudinal edge of one of said first or second pipe half members (35) and a second set of projections (35b) in the opposing longitudinal edge of the other of said first or second pipe half members (35) in an alternating manner, said first (35a) and second (35b) sets of projections respectively mating with the opposed pipe half members (35).

19. A pipe (31) having an integral partition (33) as claimed in claims 11 to 18, wherein the longitudinal edges (41) of said pipe half members (35) are bent in an L-shape.

20. A pipe (31) having an integral partition (33) as claimed in claim 14, wherein said first and second pipe half members (35) are of equal length and said first and second half partition portions (48) are formed at both ends of each of said first and second pipe half members (35) to produce closure portions (34) closing both ends of said pipe (31) upon bonding

21. A pipe (31) having an integral partition (33) as claimed in claim 20, wherein said pipe (31) comprises a header pipe (80) for a heat exchanger, a plurality of tube insertion holes (71) being formed in one of said first or second pipe half members (35) in such a manner that they are spaced from one another along an axis of the pipe half member (35), said tube insertion holes (71) each being adapted to receive tubes (91) and a reinforcement member (89) is provided to supply structural support to said tubes (91) wherein an end portion (89a) of said reinforcement member (89) is fixedly fitted in at least one of said closure portions (34).

22. A pipe (31) having an integral partition (33) as claimed in claim 20 or claim 21 wherein a reinforcement insertion hole (95) is formed in at least one of said first or second pipe half members (35) axially inside or outside of said closure portion (34) and an end portion (89a) of a reinforcement member (89) is fixedly fitted in said reinforcement insertion hole (95).

## Patentansprüche

1. Verfahren zum Herstellen eines Rohrs (31) mit einer integralen Trennwand (33), das die folgenden Schritte umfaßt:
a) Herstellen eines ersten und eines ersten und zweiten Rohr-Halbelementes, die jeweils im wesentlichen halbkreisförmigen Querschnitt haben und jeweils zwei im wesentliche parallele Längskanten (41) haben,
b) Herstellen eines ersten und eines zweiten Trennwand-Halbabschnittes (47, 86) in dem ersten bzw. dem zweiten Rohr-Halbelement (35), wobei der erste und der zweite Trennwand-Halbabschnitt (47, 86) sich quer zu den Rohr-Halbelementen (35) erstrecken und einen im wesentlichen U-förmigen Querschnitt aufweisen, wobei sich eine Basis im wesentlichen zwischen den Längskanten (41) erstreckt, und
c) Verbinden des ersten und des zweiten Rohr-Halbelementes (35) an entsprechenden Längskanten (41), um das Rohr (31) herzustellen, wobei'der erste und der zweite Trennwand-Halbabschnitt (47, 80) einander gegenüberliegend ausgerichtet worden sind, so daß, wenn der Schritt des Verbindens ausgeführt wird, die jeweiligen Basen des ersten und des zweiten Trennwandhalteabschnitts (47, 86) miteinander in Kontakt gebracht werden und so die integrale Trennwand (33) bilden.

2. Verfahren zum Herstellen eines Rohrs (31), mit einer integralen Trennwand (33) nach Anspruch 1, wobei der Schritt des Herstellens des ersten und des zweiten Rohr-Halbelementes (35) mit einer einzelnen flachen Platte ausgeführt wird und eine der Längskanten (41) des ersten Rohr-Halbelementes (35) mit einer der Längskanten (41) des zweiten Rohr-Halbelementes (35) durch einen im wesentlichen rechteckig geformten Verbindungsabschnitt (37) verbunden ist.

3. Verfahren zum Herstellen eines Rohrs (31) mit einer integralen Trennwand (33) nach Anspruch 2, wobei der erste und der zweite Trennwand-Halbabschnitt (47) über den Verbindungsabschnitt (37) aneinander angrenzend ausgerichtet werden und der Schritt des Herstellens des ersten und des zweiten Trennwand-Halbabschnitts (47) den Schritt des Entfernens wenigstens des Teils des Verbindungsabschnitts (37) einschließt, der zwischen dem ersten und dem zweiten Trennwand-Halbabschnitt (47) angeordnet ist.

4. Verfahren zum Herstellen eines Rohrs (31) mit einer integralen Trennwand (33) nach Anspruch 3, wobei ein erster und ein zweiter Trennwand-Herstellungs-Halbabschnitt (39) vorhanden sind, die sich quer über die entsprechenden Rohr-Halbelemente (35) erstrecken und einen im wesentlichen U-förmigen Querschnitt mit einem Paar einander gegenüberliegender Seitenwände aufweisen, und der Schritt des Herstellens des ersten und des zweiten Trennwand-Halbabschnitts (47) des weiteren den Schritt einschließt, bei dem der erste und der zweite Trennwand-Herstellungs-Halbabschnitt (39) von einander gegenüberliegenden Seitenwänden her solange zusammengedrückt werden, bis die aneinander gegenüberliegenden Seitenwände im wesentlichen zusammengepreßt sind.

5. Verfahren zum Herstellen eines Rohrs (31) mit einer integralen Trennwand (33) nach Anspruch 2, wobei die flache Platte eine Aluminiumplatte (67) umfaßt, auf der eine Hartlötmaterialschicht (65) ausgebildet ist, und bei dem Verbindungsschritt das erste und das zweite Rohr-Halbelement (35) sowie der erste und der zweite Trennwand-Halbabschnitt (47, 86) miteinander verlötet werden, wobei die Hartlötmaterialschicht (65) die Außenfläche des Rohrs (31) bildet.

6. Verfahren zum Herstellen eines Rohrs (31) mit einer integralen Trennwand (33) nach einem der vorangehenden Ansprüche, das des weiteren den Schritt des Herstellens von Röhreneinführlöchern (71) in dem ersten oder dem zweiten Rohr-Halbelement (35) umfaßt.

7. Verfahren zum Herstellen eines Rohrs (31) mit einer integralen Trennwand (33) nach einem der vorangehenden Ansprüche, das des weiteren den Schritt des Schneidens eines Schlitzes (39a) in die Basis eines der Trennwand-Halbabschnitte (47a), um so Schnittenden der aneinander gegenüberliegenden Seitenwände herzustellen, sowie des Aufweitens der Schnittenden nach außen um einen aufgeweiteten Abschnitt herzustellen, umfaßt, wobei der andere der Trennwand-Halbabschnitte (47) in dem aufgeweiteten Abschnitt aufgenommen wird.

8. Verfahren zum Herstellen eines Rohrs (31) mit einer integralen Trennwand (33) nach einem der vorangehenden Ansprüche, das des weiteren die Schritte des Herstellens einer ersten Gruppe von Vorsprüngen (35a) an einer Längskante des ersten oder des zweiten Rohr-Halbelementes (35) und einer zweiten Gruppe von Vorsprüngen (35b) an der gegenüberliegenden Längskante des anderen, d.h. des ersten oder des zweiten Rohr-Halbelementes (35), in abwechselnder Reihenfolge umfaßt, wobei die erste (35a) und zweite (35b) Gruppe von Vorsprüngen jeweils mit den gegenüberliegenden Rohr-Halbelementen (35) in Eingriff kommen.

9. Verfahren zum Herstellen eines Rohrs (31) mit einer integralen Trennwand (33) nach einem der vorangehenden Ansprüche, das des weiteren den Schritt des Biegens der Längskanten (41) der Rohr-Halbelemente (35) in einer L-Form umfaßt.

10. Verfahren zum Herstellen eines Rohrs (31) mit einer integralen Trennwand (33) nach Anspruch 4, wobei das erste und das zweite Rohr-Halbelement (35) gleiche Länge haben und der erste sowie der zweite Trennwand-Halbabschnitt (48) an beiden Enden sowohl des ersten als auch des zweiten Rohr-Halbelementes (35) ausgebildet sind, um beide Enden des Rohrs (31) in dem Verbindungsschritt zu verschließen.

11. Rohr (31) mit einer integralen Trennwand (33), das umfaßt:
ein erstes und ein zweites Rohr-Halbelement (35), die jeweils im wesentlichen habkreisförmigen Querschnitt haben und jeweils zwei im wesentlichen parallele Längskanten (41) haben,
einen ersten und einen zweiten Trennwand-Halbabschnitt (47, 86), die in dem ersten bzw. dem zweiten Rohr-Halbelement (35) ausgebildet sind und sich quer zu den Rohr-Halbelementen (35) erstrecken und einen im wesentlichen U-förmigen Querschnitt haben, wobei sich eine Basis im wesentlichen zwischen den Längskanten (41) erstreckt,
wobei das erste und das zweite Rohr-Halbelement (35) an entsprechenden Längskanten (41) verbunden werden, um das Rohr (31) herzustellen, der erste und der zweite Trennwand-Halbabschnitt (47, 86) einander gegenüberliegend ausgerichtet worden sind, so daß die entsprechenden Basen des ersten und des zweiten Trennwand-Halbabschnitts (47, 86) in Kontakt miteinander gebracht werden und so die integrale Trennwand bilden.

12. Rohr (31) mit einer integralen Trennwand (33) nach Anspruch 11, wobei das erste und das zweite Rohr-Halbelement (35) aus einer einzelnen flachen Platte hergestellt werden und eine der Längskanten (43) des ersten Rohr-Halbelementes (35) mit einer der Längskanten (41) des zweiten Rohr-Halbelementes (35) durch einen im wesentlichen rechteckig geformten Verbindungsabschnitt (37) verbunden ist.

13. Rohr (31) mit einer integralen Trennwand (33) nach Anspruch 12, wobei der erste und der zweite Trennwand-Halbabschnitt (47) über den Verbindungsabschnitt (37) aneinander angrenzend ausgerichtet sind und wenigstens der Teil des Verbindungsabschnitts (37), der zwischen dem ersten und dem zweiten Trennwand-Halbabschnitt (47) angeordnet ist, von der Platte entfernt ist.

14. Rohr (31) mit einer integralen Trennwand (33) nach Anspruch 13, wobei ein erster und ein zweiter Trennwand-Herstellungs-Halbabschnitt (39) vorhanden sind, die sich quer über die entsprechenden Rohr-Halbelemente (35) erstrecken und einem im allgemeinen U-förmigen Querschnitt mit einem Paar einander gegenüberliegender Seitenwände aufweisen, und indem der erste und der zweite Trennwand-Herstellungs-Halbabschnitt (39) von einander gegenüberliegenden Seitenwänden her solange zusammengedrückt werden, bis die einander gegenüberliegenden Seitenwände im wesentlichen zusammengepreßt sind, der erste und der zweite Trennwand-Halbabschnitt (37), die sich im wesentlichen senkrecht von der Innenfläche des ersten und des zweiten Rohr-Halbelementes (35) aus erstrecken, hergestellt werden.

15. Rohr (31) mit einer integralen Trennwand (33) nach Anspruch 12, wobei die flache Platte eine Aluminiumplatte (67) umfaßt, auf der eine Hartlötmaterialschicht (65) ausgebildet ist, und das erste und das zweite Rohr-Halbelement (35) sowie die Trennwand-Halbabschnitte (47, 86) miteinander verlötet sind, wobei die Hartlöt-Materialschicht (65) die Außenfläche des Rohrs (31) bildet.

16. Rohr (31) mit einer integralen Trennwand (33) nach einem der Ansprüche 11 bis 15, das des weiteren Röhreneinführlöcher (13) in dem ersten oder dem zweiten Rohr-Halbelement (35) umfaßt.

17. Rohr (31) mit einer integralen Trennwand (33) nach den Ansprüchen 11 bis 16, das des weiteren einen Schlitz (39a) in der Basis eines der Trennwand-Halbabschnitte (47a) umfaßt, so daß Schnittenden der einander gegenüberliegenden Seitenwände entstehen, wobei die Schnittenden nach außen aufgeweitet sind, so daß ein aufgeweiteter Abschnitt entsteht, der den anderen der Trennwand-Halbabschnitte (47) aufnimmt.

18. Rohr (31) mit einer integralen Trennwand (33) nach den Ansprüchen 11 bis 17, das des weiteren eine erste Gruppe von Vorsprüngen (35a) an einer Längskante des ersten oder des zweiten Rohr-Halbelementes (35) sowie eine zweite Gruppe von Vorsprüngen (35b) an der gegenüberliegenden Längskante des anderen, d.h. des ersten oder des zweiten Rohr-Halbelementes (35), in abwechselnder Reihenfolge umfaßt, wobei die erste (35a) und die zweite (35b) Gruppe von Vorsprüngen jeweils mit den gegenüberliegenden Rohr-Halbelementen (35) in Eingriff kommen.

19. Rohr (31) mit einer integralen Trennwand (33) nach den Ansprüchen 11 bis 18, wobei die Längskanten (41) der Rohr-Halbelemente (35) in einer L-Form gebogen sind.

20. Rohr (31) mit einer integralen Trennwand (33) nach Anspruch 14, wobei das erste und das zweite Rohr-Halbelement (35) gleiche Länge haben und der erste sowie der zweite Trennwand-Halbabschnitt (48) an beiden Enden sowohl des ersten als auch des zweiten Rohr-Halbelementes (35) ausgebildet sind, so daß Verschlußabschnitte (34) entstehen, die beim Verbinden beide Enden des Rohrs (31) verschließen.

21. Rohr (31) mit einer integralen Trennwand (33) nach Anspruch 20, wobei das Rohr (31) ein Sammlerrohr (80) für einen Wärmetauscher umfaßt, eine Vielzahl von Röhreneinführiöcher (71) in dem ersten oder dem zweiten Rohr-Halbelement (35) so ausgebildet sind, daß sie entlang einer Achse des Rohr-Halbelementes (35) voneinander beabstandet sind, die Röhreneinführlöcher (71) jeweils Röhren (91) aufnehmen und ein Verstärkungselement (89) vorhanden ist, das den Röhren (91) strukturellen Halt verleiht, wobei ein Endabschnitt (89a) des Verstärkungselementes (89) fest in wenigstens einen der Verschlußabschnitte (34) eingepaßt ist.

22. Rohr (31) mit einer integralen Trennwand (33) nach Anspruch 20 oder Anspruch 21, wobei ein Verstärkungseinführloch (95) wenigstens in dem ersten oder dem zweiten Rohr-Halbelement (35) axial innerhalb oder außerhalb des Verschlußabschnittes (34) ausgebildet ist und ein Endabschnitt (89a) als Verstärkungselement (89) fest in das Verstärkungseinführloch (95) eingepaßt ist.

## Revendications

1. Procédé de formation d'un tuyau (31) avec une cloison intégrée (33) comprenant les étapes :
(i) de formation de premier et second éléments (35) formant des demi-tuyaux, chacun étant sensiblement semi-circulaire en coupe transversale et chacun comportant deux bords longitudinaux (41) sensiblement parallèles ;
ii) de production de première et seconde parties (47, 86) formant des demi-cloisons, respectivement, dans lesdits premier et second éléments (35) formant des demi-tuyaux, lesdites première et seconde parties (47, 86) formant des demi-cloisons s'étendant transversalement dans lesdits éléments (35) formant des demi-tuyaux et ayant une forme, en coupe transversale, globalement en U avec une base s'étendant sensiblement entre lesdits bords longitudinaux (41); et
iii) de jonction desdits premier et second éléments (35) formant des demi-tuyaux le long de leurs bords longitudinaux (41) correspondants pour former ledit tuyau (31), lesdites première et seconde parties (47, 86) formant des demi-cloisons ayant été alignées en face l'une de l'autre de façon que, lorsque l'on effectue ladite étape de jonction, les bases respectives desdites première et seconde parties (47, 86) formant des demi-cloisons soient amenées en contact en formant ainsi ladite cloison intégrée (33).

2. Procédé de formation d'un tuyau (31) avec une cloison intégrée (33) selon la revendication 1, dans lequel ladite étape de formation desdits premier et second éléments (35) formant des demi-tuyaux se fait sur une unique feuille plate dans laquelle l'un des bords longitudinaux (41) dudit premier élément (35) formant demi-tuyau est raccordé à l'un des bords longitudinaux (41) dudit second élément (35) formant demi-tuyau, à l'aide d'une partie (37) de raccordement de forme sensiblement rectangulaire.

3. Procédé de formation d'un tuyau (31) avec une cloison intégrée (33) selon la revendication 2, dans lequel lesdites première et seconde parties (47) formant des demi-cloisons sont alignées à côté l'une de l'autre de part et d'autre de ladite partie (37) de jonction et dans lequel ladite étape de production des première et seconde parties (47) formant des demi-cloisons comprend l'étape d'élimination d'au moins la portion de ladite partie (37) de jonction disposée entre lesdites première et seconde parties (47) formant des demi-cloisons.

4. Procédé de formation d'un tuyau (31) avec une cloison intégrée (33) selon la revendication 3, dans lequel il est prévu des première et seconde parties (39) de formation de demi-cloison, qui s'étendent transversalement dans lesdits éléments (35) respectifs formant des demi-tuyaux et qui ont une section transversale globalement en forme de U avec une paire de parois latérales opposées, et dans lequel ladite étape de production desdites première et seconde parties (47) formant des demi-cloisons comprend aussi l'étape de compression desdites première et seconde parties (39) de formation de demi-cloison depuis des parois latérales opposées jusqu'à ce que les parois latérales opposées soient sensiblement pressées l'une contre l'autre.

5. Procédé de formation d'un tuyau (31) avec une cloison intégrée (33) selon la revendication 2, dans lequel ladite feuille plate comprend une feuille (67) d'aluminium sur laquelle est formée une couche (65) de matière de brasage, et dans lequel, dans ladite étape de jonction, lesdits premier et second éléments (35) formant des demi-tuyaux, de même que lesdites parties (47, 86) formant des demi-cloisons, sont brasés l'un à l'autre à l'aide de ladite couche (65) de matière de brasage formant la surface extérieure dudit tuyau (31).

6. Procédé de formation d'un tuyau (31) avec une cloison intégrée (33) selon l'une quelconque des revendications précédentes, comprenant en outre l'étape de formation de trous (71) d'introduction de tube dans l'un dudit premier ou second éléments (35) formant des demi-tuyaux.

7. Procédé de formation d'un tuyau (31) avec une cloison intégrée (33) selon l'une quelconque des revendications précédentes, comprenant en outre l'étape de découpe d'une fente (39a) dans la base de l'une desdites parties (47a) formant des demi-cloisons, en produisant ainsi des extrémités découpées pour lesdites parois latérales opposées et en évasant lesdites extrémités découpées vers l'extérieur pour former une partie évasée, l'autre desdites parties (47) formant des demi-cloisons étant reçue dans ladite partie évasée.

8. Procédé de formation d'un tuyau (31) avec une cloison intégrée (33) selon l'une quelconque des revendications précédentes, comprenant en outre les étapes de formation, de manière alternée, d'un premier ensemble de saillies (35a) dans un bord longitudinal de l'un desdits premier ou second éléments (35) formant des demi-tuyaux et d'un second ensemble de saillies (35b) dans le bord longitudinal opposé de l'autre desdits premier ou second éléments (35) formant des demi-tuyaux, lesdits premier (35a) et second (35b) ensembles de saillies s'adaptant, respectivement, avec les éléments (35) opposés formant des demi-tuyaux.

9. Procédé de formation d'un tuyau (31) avec une cloison intégrée (33) selon l'une quelconque des revendications précédentes, comprenant en outre l'étape de pliage des bords longitudinaux (41) desdits éléments (35) formant des demi-tuyaux en une forme en L.

10. Procédé de formation d'un tuyau (31) avec une cloison intégrée (33) selon la revendication 4, dans lequel lesdits premier et second éléments (35) formant des demi-tuyaux sont de longueur égale et desdites première et seconde parties (48) formant des demi-cloisons sont formées aux deux extrémités de chacun desdits premier et second éléments (35) formant des demi-tuyaux pour clore les deux extrémités dudit tuyau (31), au cours de ladite étape de jonction.

11. Tuyau (31) comportant une cloison intégrée (33) comprenant :
des premier et second éléments (35) formant des demi-tuyaux, chacun étant sensiblement semi-circulaire en coupe transversale et chacun comportant deux bords longitudinaux (41) sensiblement parallèles ;
des première et seconde parties (47, 86) formant des demi-cloisons, formées, respectivement, dans lesdits premier et second éléments (35) formant des demi-tuyaux s'étendant transversalement dans lesdits éléments (35) formant des demi-tuyaux et ayant une forme, en coupe transversale, globalement U avec une base s'étendant sensiblement entre lesdits bords longitudinaux (41);
lesdits premier et second éléments (35) formant des demi-tuyaux joints le long de leurs bords longitudinaux (41) correspondants pour former ledit tuyau (31), lesdites première et seconde parties (47, 86) formant des demi-cloisons ayant été alignées en face l'une de l'autre de façon que les bases respectives desdites première et seconde parties (47, 86) formant des demi-cloisons soient amenées en contact en formant ainsi ladite cloison intégrée (33).

12. Tuyau (31) ayant une cloison intégrée (33) selon la revendication 11, dans lequel lesdits premier et second éléments (35) formant des demi-tuyaux sont formés à partir d'une unique feuille plate, dans laquelle l'un des bords longitudinaux (41) dudit premier élément (35) formant demi-tuyau est raccordé à l'un des bords longitudinaux (41) dudit second élément (35) formant demi-tuyau, à l'aide d'une partie (37) de raccordement de forme sensiblement rectangulaire.

13. Tuyau (31) ayant une cloison intégrée (33) selon la revendication 12, dans lequel lesdites première et seconde parties (47) formant des demi-cloisons sont alignées à côté l'une de l'autre de part et d'autre de ladite partie (37) de jonction, et dans lequel au moins la portion de ladite partie (37) de jonction disposée entre lesdites première et seconde parties (47) formant des demi-cloisons est éliminée de ladite feuille.

14. Tuyau (31) ayant une cloison intégrée (33) selon la revendication 13, dans lequel sont prévues des première et seconde parties (39) de formation de demi-cloison s'étendant transversalement dans lesdits éléments (35) respectifs formant des demi-tuyaux et ayant une forme de section transversale globalement en U avec une paire de parois latérales opposées et dans lequel on forme par compression lesdites première et seconde parties (39) de formation de demi-cloison à partir de parois latérales opposées jusqu'à ce que les parois latérales opposées soient sensiblement pressées l'une contre l'autre, lesdites première et seconde parties (47) formant des demi-cloisons s'étendant sensiblement perpendiculairement depuis la surface intérieure desdits premier et second éléments (35) formant des demi-tuyaux.

15. Tuyau (31) ayant une cloison intégrée (33) selon la revendication 12, dans lequel ladite feuille plate comprend une feuille (67) d'aluminium sur laquelle est formée une couche (65) de matière de brasage, dans lequel lesdits premier et second éléments (35) formant des demi-tuyaux, de même que lesdites parties (47, 86) formant des demi-cloisons, sont brasés l'un à l'autre à l'aide de ladite couche (65) de matière de brasage formant la surface extérieure dudit tuyau (31).

16. Tuyau (31) ayant une cloison intégrée (33) selon l'une quelconque des revendications 11 à 15, comprenant en outre des trous (13) d'introduction de tube dans l'un desdits premier ou second éléments (35) formant des demi-tuyaux.

17. Tuyau (31) ayant une cloison intégrée (33) selon l'une quelconque des revendications 11 à 16, comprenant en outre une fente (39a) dans la base de l'une desdites parties (47a) formant des demi-cloisons, en produisant ainsi des extrémités découpées pour lesdites parois latérales opposées, les extrémités découpées étant évasées vers l'extérieur pour former une partie évasée apte à recevoir l'autre desdites parties (47) formant des demi-cloisons.

18. Tuyau (31) ayant une cloison intégrée (33) selon l'une quelconque des revendications 11 à 17, comprenant en outre, de manière alternée, un premier ensemble de saillies (35a) dans un bord longitudinal de l'un desdits premier ou second éléments (35) formant des demi-tuyaux et un second ensemble de saillies (35b) dans le bord longitudinal opposé de l'autre desdits premier ou second éléments (35) formant des demi-tuyaux, lesdits premier (35a) et second (35b) ensembles de saillies s'adaptant, respectivement, avec les éléments (35) opposés formant des demi-tuyaux.

19. Tuyau (31) ayant une cloison intégrée (33) selon les revendications 11 à 18, dans lequel les bords longitudinaux (41) desdits éléments (35) formant des demi-tuyaux sont repliés en une forme de L.

20. Tuyau (31) ayant une cloison intégrée (33) selon la revendication 14, dans lequel lesdits premier et second éléments (35) formant des demi-tuyaux sont de longueur égale et desdites première et seconde parties (48) formant des demi-cloisons sont formées aux deux extrémités de chacun desdits premier et second éléments (35) formant des demi-tuyaux pour produire des parties (34) de fermeture closant les deux extrémités dudit tuyau (31), après jonction.

21. Tuyau (31) ayant une cloison intégrée (33) selon la revendication 20, dans lequel ledit tuyau (31) comprend un tuyau (80) de collecteur de tête pour un échangeur de chaleur, une pluralité de trous (71) d'introduction de tube étant formée dans l'un desdits premier ou second éléments (35) formant des demi-tuyaux de façon qu'ils soient espacés les uns des autres suivant un axe de l'élément (35) formant demi-tuyau, lesdits trous (71) d'introduction de tube étant chacun aptes à recevoir des tubes (91), et dans lequel il est prévu un élément (89) de renfort pour fournir un support structurel auxdits tubes (91), une partie d'extrémité (89a) dudit élément (89) de renfort étant montée fermement dans au moins l'une desdites parties (34) de fermeture.

22. Tuyau (31) ayant une cloison intégrée (33) selon la revendication 20 ou la revendication 21, dans lequel un trou (95) d'introduction de renfort est formé dans au moins l'un desdits premier ou second éléments (35) formant des demi-tuyaux, axialement, à l'intérieur ou à l'extérieur de ladite partie (34) de fermeture, une partie d'extrémité (89a) d'un élément (89) de renfort étant montée fermement dans ledit trou (95) d'introduction de renfort.
